# EUROPÄISCHE PATENTSCHRIFT

(11) **EP 1 674 381 B1**
(45) Veröffentlichungstag und Bekanntmachung des Hinweises auf die Patenterteilung: **26.09.2007**
(21) Anmeldenummer: 05026677.4
(22) Anmeldetag: 07.12.2005
(51) Int. Cl.: B62D 35/02

(54) **Luftleitvorrichtung**
Spoiler
Aileron

(30) Priorität: 22.12.2004 DE 102004061835
(43) Veröffentlichungstag der Anmeldung: 28.06.2006
(73) Patentinhaber: Bayerische Motoren Werke Aktiengesellschaft, 80809 München (DE)
(72) Erfinder: Letz, Andreas, 04356 Leipzig (DE); Winkelmann, Holger, 85301 Guentersdorf (DE)

(56) Entgegenhaltungen:
- DE-A1- 10 213 650
- FR-A- 2 575 126
- FR-A- 2 858 793

## Beschreibung

Die Erfindung betrifft eine Luftleitvorrichtung nach dem Oberbegriff des Anspruchs 1.

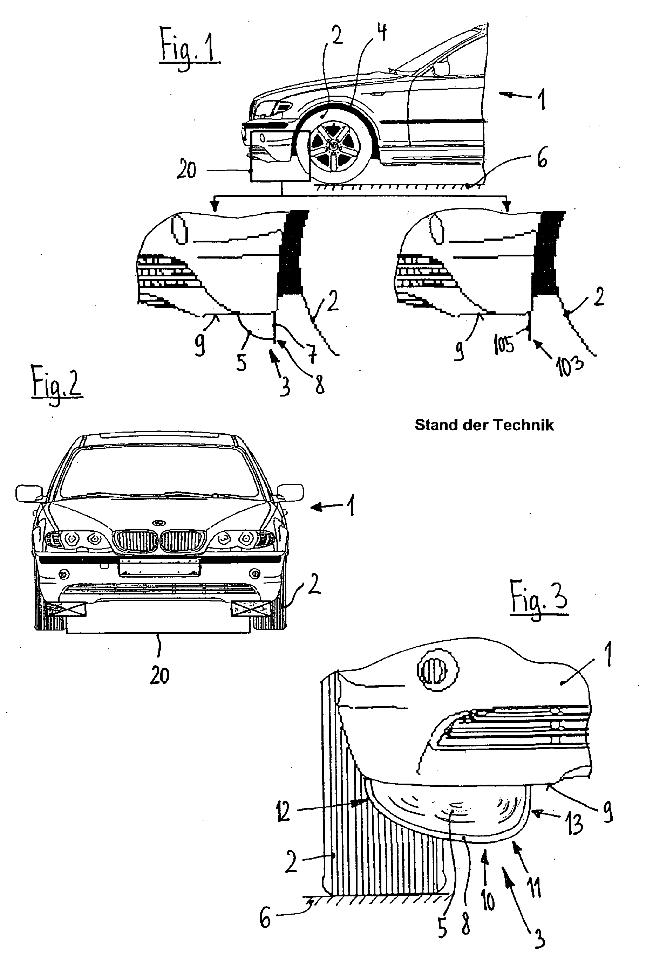

Derartige Luftleitvorrichtungen sind allgemein bekannt und im rechten Teil der vergrößerten Detaildarstellung von Fig. 1 abgebildet. Hierbei sind auch dreidimensional geformte Luftleitvorrichtungen bekannt, die in einem Horizontalschnitt einen bogenförmigen Verlauf aufweisen (Alfa Romeo GT). Die Fig. 2 zeigt die Bereiche vor den Vorderrädern eines Kraftfahrzeuges, in denen die Luftleitvorrichtungen üblicherweise angeordnet sind. Durch die Luftleitvorrichtungen wird die während der Fahrt auftretende Luftströmung teilweise aus dem Bereich der sich drehenden Rädern weg geleitet. Obwohl die Luftleitvorrichtung den Luftwiderstand des Fahrzeugkörpers erhöht, wird insgesamt eine Verringerung des Gesamtluftwiderstands des Fahrzeugs erreicht, da der von den Rädern verursachte Luftwiderstandsanteil stärker reduziert wird als die einhergehende Erhöhung des Widerstands des Fahrzeugkörpers.

Ein gattungsgemäßes Dokument ist bereits bekannt, zum Beispiel DE 10213650.

Aufgabe der Erfindung ist es, die bekannte Luftleitvorrichtung derart weiterzubilden, dass eine weitere Verringerung des Gesamtluftwiderstands des Fahrzeugs erreicht wird.

Diese Aufgabe wird durch eine Luftleitvorrichtung mit den Merkmalen des Anspruchs 1 gelöst.

Kerngedanke ist es dabei, eine dreidimensional geformte Luftleitvorrichtung vorzusehen, die auf Grund ihrer bauchigen Vorderseite eine aerodynamisch günstigere Umströmung ermöglicht als dies bei zweidimensionalen Luftleitvorrichtungen der Fall ist. Zusätzlich ist an zumindest einem Teilbereich des freien Randes der Luftleitvorrichtung eine Abrisskante vorgesehen, durch die der auf das Rad wirkende Strömungsdruck reduziert wird. Damit verringert sich der Anteil des Luftwiderstands, der durch das Rad verursacht wird, beträchtlich. Durch die beiden Maßnahmen in Kombination ergibt sich eine spürbare Verringerung des Gesamtluftwiderstandes des Fahrzeugs.

Vorteilhafte Ausgestaltungen der Erfindung sind Gegenstand der Unteransprüche.

Ein mögliches Ausführungsbeispiel der Erfindung ist in der Zeichnung dargestellt und wird nachfolgend näher erläutert. Es zeigt:
- Fig. 1: eine Seitenansicht einer Luftleitvorrichtung nach dem Stand der Technik (rechte Detailvergrößerung) und gemäß der Erfindung (linke Detailvergrößerung),
- Fig. 2: eine Frontansicht auf ein Fahrzeug, mit Kennzeichnung derjenigen Bereiche, in denen erfindungsgemäße Luftleitvorrichtungen angeordnet sind,
- Fig. 3: eine Detailvergrößerung aus Fig. 2, mit einer erfindungsgemäßen Luftleitvorrichtung,
- Fig. 4: in einer der Fig. 3 entsprechenden Darstellungsweise eine weitere Ausführungsform einer erfindungsgemäßen Luftleitvorrichtung,
- Fig. 5: eine Seitenansicht einer erfindungsgemäßen Luftleitvorrichtung mit maßlichen Angaben und
- Fig. 6: eine Frontansicht einer erfindungsgemäßen Luftleitvorrichtung.

Fig. 1 zeigt einen vorderen Bereich eines Kraftfahrzeugs 1, mit Detailvergrößerungen des Abschnittes vor dem linken Vorderrad 2 des Kraftfahrzeugs 1. Die rechte Detailvergrößerung zeigt eine bekannte Luftleitvorrichtung 103, die unmittelbar vor einem Radausschnitt 4 angeordnet ist, in einem Bereich 20. Die Bereiche 20 sind in Fig. 2 in der Frontansicht des Kraftfahrzeugs 1 nochmals dargestellt. Die Luftleitvorrichtung 103 wird von einem zweidimensionalen, plattenförmigen Luftleitkörper 105 gebildet, der an seinem oberen Endabschnitt im Bereich des Unterbodens 9 befestigt ist. Der freie untere Endabschnitt der Luftleitvorrichtung 103 ist der Fahrbahn 6 zugewandt. Der plattenförmige Luftleitkörper 105 ist im wesentlichen in einer Querebene des Fahrzeugs 1, senkrecht zur Fahrbahn 6, ausgerichtet, kann jedoch auch bis in den Fahrzeugseitenbereich hineingezogen sein (Alfa Romeo GT). Der Luftleitkörper 105 ist bevorzugt rechteckförmig, kann jedoch auch eine hiervon abweichende Form aufweisen. Derartige bekannte Luftleitvorrichtungen 103 werden allgemein als "Radspoiler", "Staulippen", "Airdams", "Flaps" etc. bezeichnet.

Die linke Detailvergrößerung von Fig. 1 zeigt eine erfindungsgemäße Luftleitvorrichtung 3, die im gleichen Bereich 20 des Unterbodens 9 angeordnet ist wie die bekannte Luftleitvorrichtung 103. Die Luftleitvorrichtung 3 besteht im wesentlichen aus einem dreidimensional geformten Luftleitkörper 5, der konvex nach außen gewölbt ist. Im dargestellten Ausführungsbeispiel ist die Wölbung in der Seitenansicht viertelkreisförmig, mit einer etwa lotrechten Tangente an den Viertelkreis im Bereich unmittelbar am Unterboden 9. Die Wölbung des Luftleitkörpers 5 läuft unterseitig in einer etwa waagrechten Tangente an den Viertelkreis aus.

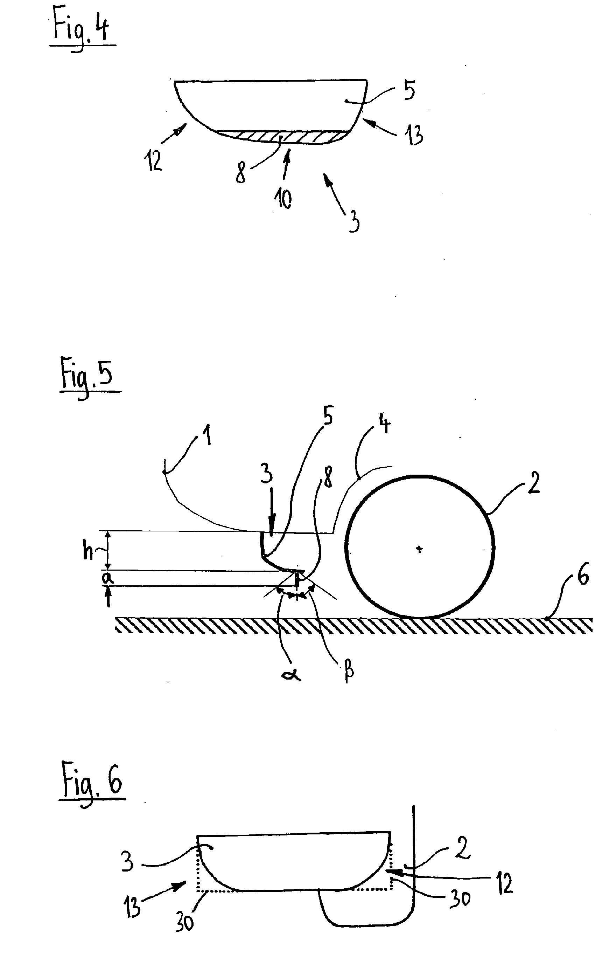

Während die Fig. 1 und 2 allgemein die Bereiche 20 kennzeichnen, in denen Luftleitvorrichtungen 3 bzw. 103 zweckmäßigerweise angeordnet sind, zeigen die Fig. 3 und 4 mögliche Ausführungsbeispiele erfindungsgemäßer Luftleitvorrichtungen 3 in vergrößerter Darstellung. Der bauchige Luftleitkörper 5 hat in der Frontansicht, ausgehend von seinem fahrzeugaußenseitigen Endabschnitt 12, einen etwa parabelförmigen Umriss, wobei die Tangente an die Parabel im Bereich des Unterbodens 9 etwa lotrecht verläuft. Im Mittenbereich 10 des Luftleitkörpers 5 nähert sich die Tangente an die Parabel der Waagrechten an, um im innenliegenden Abschnitt 11 mit stärkerer Krümmung als am fahrzeugaußenseitigen Abschnitt 12 in einen etwa lotrechten Bereich 13 überzugehen.

Der bauchig gewölbte Luftleitkörper 5 kann rückseitig von einer Platte 7 geschlossen werden, wie in Fig. 2, linker Teil der Abbildung, mit strichlierter Linie dargestellt. In einer bevorzugten Ausführungsform der Erfindung fehlt diese rückseitige Platte 7 jedoch. Der rückseitig offene Luftleitkörper 5 verfügt Bauart bedingt über eine Nachgiebigkeit beim Überfahren von Hindernissen (z. B. Bordsteinabfahrt), so dass Beschädigung der Luftleitvorrichtung 3 vermieden werden.

Vom bauchig gewölbten Luftleitkörper 5 ragt eine Abrisskante 8 nach unten ab. Gemäß Fig. 3 ist die Abrisskante 8 durchlaufend ausgebildet und reicht vom fahrbahnzugewandten Mittenbereich 10 der Luftleitvorrichtung 3 einerseits bis zum fahrzeugaußenseitigen Bereich 12 und andererseits bis zum fahrzeuginnenseitigen Bereich 13.

In der Ausführungsform nach Fig. 4 verläuft die Abrisskante 8 nur im Mittenbereich 10 der Luftleitvorrichtung 3, während die seitlichen Bereiche 12 und 13 ausgespart sind.

Abrisskanten 8, wie in den Fig. dargestellt, werden allgemein auch als "Gurneys" bezeichnet.

Fig. 5 gibt bevorzugte geometrischen Relationen erfindungsgemäßer Luftleitvorrichtungen 3 an. Die Höhe a der Abrisskante 8 beträgt etwa 5 % bis etwa 20 % der Höhe h des Luftleitkörpers 5. Der Neigungswinkel *α* bzw. *β* der Abrisskante 8 gegenüber dem Lot beträgt maximal 45°.

In Fig. 6 sind einige weitere grundsätzliche geometrische Randbedingungen für erfindungsgemäße Luftleitvorrichtungen 3 angegeben. Zum einen muss die Luftleitvorrichtung 3 in ihrer Projektion parallel zur Fahrtrichtung einen Teil des Rades 2 überdecken. Außerdem muss die Luftleitvorrichtung 3 - wiederum in Fahrtrichtung - an ihrem fahrzeugaußenseitigen Bereich 12 und bevorzugt auch an ihrem fahrzeuginnenseitigen Bereich 13 abgerundet oder abgeschrägt verlaufen. Ein rechtwinkliger Verlauf 30, wie mit punktierten Linien dargestellt, ist zu vermeiden.

Abweichend vom dargestellten Ausführungsbeispiel einer Luftleitvorrichtung 3, die in der Seitenansicht etwa viertelkreisförmig ist und in der Frontansicht zumindest teilweise parabelförmige Begrenzungen aufweist, kann die Form der Luftleitvorrichtung 3 beispielsweise auch wie folgt sein:
- in der Seitenansicht ähnlich einem Viertel einer Ellipse,
- in der Seitenansicht ähnlich einem Segment eines Kreises, einer Ellipse oder dergleichen,
- in der Seitenansicht ähnlich einem Parabelabschnitt,
- in der Frontansicht etwa halbkreisförmig oder ähnlich einer Hälfte einer Ellipse,
- in der Frontansicht ähnlich einem Segment eines Kreises, einer Ellipse oder dergleichen

Die erfindungsgemäßen Luftleitvorrichtungen 3 wirken sich insbesondere vor den Vorderrädern 2 vorteilhaft aus. Selbstverständlich können die Luftleitvorrichtungen 3 jedoch zusätzlich oder alternativ auch vor den Hinterrädern eines Fahrzeugs 1 angeordnet sein.

Während mit bekannten Luftleitvorrichtungen 103 der Gesamtluftwiderstandsbeiwert cₓ um ca. 0,001 bis 0,010 reduziert werden kann, ist bei Einsatz erfindungsgemäßer Luftleitvorrichtungen 3 eine weitere Reduzierung des Gesamtluftwiderstandsbeiwertes cₓ um ca. 0,001 bis 0,016 möglich.

Zum einen wird durch die bauchige Form der Luftleitvorrichtung 3 deren eigener Luftwiderstand herabgesetzt. Da je nach Geometrie der Luftleitvorrichtung 3 jedoch im Vergleich zu einer zweidimensionalen Luftleitvorrichtung auch weniger große Reduzierungen des Gesamtluftwiderstands des Fahrzeugs erzielbar sind, ist die Abrisskante 8 vorgesehen. Erst durch die Abrisskante 8 wird der Strömungsdruck am Fahrzeugrad 2 und damit dessen Luftwiderstand optimal reduziert.

Die Luftleitvorrichtung 3 besteht bevorzugt aus einem weichelastischen Material.

Zusammenfassend ergibt sich Folgendes: Eine Luftleitvorrichtung 3 eines Fahrzeugs 1 in Form eines so genannten Radspoilers weist an ihrer radabgewandten Vorderseite einen bauchigen Luftleitkörper 5 auf. An den freien Endbereichen der Luftleitvorrichtung 3, bevorzugt an ihrem unteren Bereich 14, ist eine umlaufende Abrisskante 8 vorgesehen. Durch das Zusammenspiel von konvex gewölbtem Luftleitkörper 5 und Abrisskante 8 ergibt sich gegenüber bekannten Luftleitvorrichtungen 103 eine Reduzierung des Gesamtluftwiderstands des Fahrzeugs 1.

## Patentansprüche

1. Luftleitvorrichtung für ein Fahrzeug, die im Bereich vor einem Fahrzeugrad angeordnet ist und nach unten in Richtung der Fahrbahn absteht,
**dadurch gekennzeichnet, dass** die Luftleitvorrichtung (3) einen Luftleitkörper (5) aufweist, der auf seiner radabgewandten Vorderseite konvex gewölbt ist und der an zumindest einem Teilbereich seines freien Endabschnitts eine Abrisskante (8) aufweist.

2. Luftleitvorrichtung nach Anspruch 1,
**dadurch gekennzeichnet, dass** die Abrisskante (8) vom fahrbahnzugewandten Mittenbereich (10) des Luftleitkörpers (5) bis etwa zum fahrzeugaußenseitigen Bereich (12) und/oder bis zum fahrzeuginnenseitigen Bereich (11, 13) durchlaufend ausgebildet ist.

3. Luftleitvorrichtung nach Anspruch 1,
**dadurch gekennzeichnet, dass** die Abrisskante (8) lediglich im Mittenbereich (10) des Luftleitkörpers (5) vorgesehen ist.

4. Luftleitvorrichtung nach einem der vorgenannten Ansprüche,
**dadurch gekennzeichnet, dass** die Höhe (a) der Abrisskante (8) etwa 5 % bis etwa 20 % der Höhe (h) des Luftleitkörpers (5) beträgt.

5. Luftleitvorrichtung nach einem der vorgenannten Ansprüche,
**dadurch gekennzeichnet, dass** der Neigungswinkel (α, β) der Abrisskante (8) gegenüber der Lotrechten maximal 45 ° beträgt.

6. Luftleitvorrichtung nach einem der vorgenannten Ansprüche,
**dadurch gekennzeichnet, dass** der Luftleitkörper (5) in der Seitenansicht des Fahrzeugs (1) etwa die Form eines Segments eines Kreises oder einer Ellipse hat.

7. Luftleitvorrichtung nach einem der vorgenannten Ansprüche,
**dadurch gekennzeichnet, dass** der Luftleitkörper (5) in der Seitenansicht des Fahrzeugs (1) etwa die Form eines Viertels eines Kreises oder einer Ellipse hat.

8. Luftleitvorrichtung nach einem der vorgenannten Ansprüche,
**dadurch gekennzeichnet, dass** der Luftleitkörper (5) in der Seitenansicht des Fahrzeugs (1) etwa die Form eines Parabelabschnitts hat.

9. Luftleitvorrichtung nach einem der vorgenannten Ansprüche,
**dadurch gekennzeichnet, dass** die der Luftleitkörper (5) in der Frontansicht des Fahrzeugs (1) etwa die Form eines Segments eines Kreises oder einer Ellipse hat.

10. Luftleitvorrichtung nach einem der vorgenannten Ansprüche,
**dadurch gekennzeichnet, dass** der Luftleitkörper (5) in der Frontansicht des Fahrzeugs (1) etwa die Form einer Hälfte eines Kreises oder einer Ellipse hat.

11. Luftleitvorrichtung nach einem der vorgenannten Ansprüche,
**dadurch gekennzeichnet, dass** der Luftleitkörper (5) in der Frontansicht des Fahrzeugs (1) wenigstens einen Bereich mit einer Form ähnlich einem Parabelabschnitt hat.

12. Luftleitvorrichtung nach einem der vorgenannten Ansprüche,
**dadurch gekennzeichnet, dass** der Luftleitkörper (5) in der Frontansicht fahrzeuginnenseitig kleinere Krümmungsradien aufweist als fahrzeugaußenseitig.

## Claims

1. An air guide device for a vehicle, disposed in the region in front of a wheel and projecting downwards towards the road,
**characterised in that** the air guide device (3) comprises an air guide member (5) which is convex on the front side remote from the wheel and has a chopping edge (8) on at least a part of its free end portion.

2. An air guide device according to claim 1,
**characterised in that** the chopping edge (8) extends continuously from the central region (10) of the air guide member (5) facing the road, approximately up to the region (12) on the outside of the vehicle and/or up to the region (11, 13) on the inside of the vehicle.

3. An air guide device according to claim 1,
**characterised in that** the chopping edge (8) is provided only in the centre region (10) of the air guide member (5).

4. An air guide device according to any of the preceding claims,
**characterised in that** the height (a) of the chopping edge (8) is about 5% to about 20% of the height (h) of the air guide member (5).

5. An air guide device according to any of the preceding claims,
**characterised in that** the angle (α, ) of the chopping edge (8) to the vertical is not more than 45°.

6. An air guide device according to any of the preceding claims,
**characterised in that** in the vehicle (1) in side view, the air guide member (5) has approximately the shape of a segment of a circle or an ellipse.

7. An air guide device according to any of the preceding claims,
**characterised in that** in the vehicle (1) in side view, the air guide member (5) has approximately the shape of a quarter-circle or ellipse.

8. An air guide device according to any of the preceding claims,
**characterised in that** in the vehicle (1) in side view, the air guide member (5) has approximately the shape of a portion of a parabola.

9. An air guide device according to any of the preceding claims,
**characterised in that** in the vehicle (1) in front view, the air guide device (5) has approximately the shape of a segment of a circle or an ellipse.

10. An air guide device according to any of the preceding claims,
**characterised in that** in the vehicle (1) in front view, the air guide member (5) has approximately the shape of a half-circle or ellipse.

11. An air guide device according to any of the preceding claims,
**characterised in that** in the vehicle (1) in front view, the air guide device (5) has at least one portion with a shape similar to a portion of a parabola.

12. An air guide device according to any of the preceding claims,
**characterised in that** in front view the air guide member (5) has smaller radii of curvature on the inside of the vehicle than on the outside of the vehicle.

## Revendications

1. Aileron de véhicule installé dans la zone à l'avant d'une roue et venant en saillie vers le bas en direction de la chaussée,
**caractérisé en ce que**
l'aileron (3) comporte un organe de guidage d'air (5) dont la face avant non tournée vers la roue est bombée sur une forme convexe et ayant au moins une zone partielle de son segment d'extrémité libre comportant une arête de décrochage (8).

2. Aileron selon la revendication 1,
**caractérisé en ce que**
l'arête de décrochage (8) est continue à partir de la zone centrale (10) tournée vers la chaussée de l'organe de guidage (5) sensiblement jusqu'à la zone (12) côté extérieur du véhicule et/ou jusqu'à la zone (11, 13) côté intérieur du véhicule.

3. Aileron selon la revendication 1,
**caractérisé en ce que**
l'arête de décrochage (8) est prévue uniquement dans la zone centrale (10) de l'organe de guidage d'air (5).

4. Aileron selon l'une des revendications précédentes,
**caractérisé en ce que**
la hauteur (a) de l'arête de décrochage (8) représente entre 5 % jusqu'à 20 % de la hauteur (h) de l'organe de guidage d'air (5).

5. Aileron selon l'une des revendications précédentes,
**caractérisé en ce que**
l'angle d'inclinaison (α, β) de l'arête de décrochage (8) est au maximum de 45° par rapport à la direction verticale.

6. Aileron selon l'une quelconque des revendications précédentes,
**caractérisé en ce que**
l'organe de guidage d'air (5) présente en vue de côté du véhicule (1) sensiblement la forme d'un segment de cercle ou d'ellipse.

7. Aileron selon l'une quelconque des revendications précédentes,
**caractérisé en ce que**
l'organe de guidage d'air (5) en vue de côté du véhicule (1) a sensiblement la forme d'un quart de cercle ou d'ellipse.

8. Aileron selon l'une quelconque des revendications précédentes,
**caractérisé en ce que**
l'organe de guidage d'air (5) a en vue de côté du véhicule (1) sensiblement la forme d'un segment de parabole.

9. Aileron selon l'une quelconque des revendications précédentes,
**caractérisé en ce que**
l'organe de guidage d'air (5) en vue de face du véhicule (1) a sensiblement la forme d'un segment de cercle ou d'ellipse.

10. Aileron selon l'une quelconque des revendications précédentes,
**caractérisé en ce que**
l'organe de guidage d'air (5) en vue de face du véhicule (1) a sensiblement la forme d'une moitié de cercle ou d'une ellipse.

11. Aileron selon l'une quelconque des revendications précédentes,
**caractérisé en ce que**
l'organe de guidage d'air (5) en vue de face du véhicule (1) présente au moins une zone avec une forme analogue à un segment de parabole.

12. Aileron selon l'une quelconque des revendications précédentes,
**caractérisé en ce que**
l'organe de guidage d'air (5) en vue de face présente côté intérieur du véhicule des rayons de courbure plus petits que sur le côté extérieur du véhicule.
